# EUROPÄISCHE PATENTSCHRIFT

(11) **EP 1 413 123 B1**
(45) Veröffentlichungstag und Bekanntmachung des Hinweises auf die Patenterteilung: **23.03.2005**
(21) Anmeldenummer: 02753015.3
(22) Anmeldetag: 16.07.2002
(51) Int. Cl.: H04M 1/247, H04M 1/56

(54) **EIGENE RUFNUMMER ANZEIGENDES TELEFON**
TELEPHONE
TELEPHONE

(30) Priorität: 03.08.2001 DE 10138228
(43) Veröffentlichungstag der Anmeldung: 28.04.2004
(73) Patentinhaber: SIEMENS AKTIENGESELLSCHAFT, 80333 München (DE)
(72) Erfinder: DUMOULIN, Bernhard, F-67480 Roeschwoog (FR)
(86) Internationale Anmeldenummer: PCT/DE2002/002603
(87) Internationale Veröffentlichungsnummer: WO 2003/017627

(56) Entgegenhaltungen:
- DE-B- 1 202 836
- GB-A- 2 262 630
- US-A- 5 299 256
- PATENT ABSTRACTS OF JAPAN vol. 1999, no. 10, 31. August 1999 (1999-08-31) & JP 11 136343 A (SONY CORP), 21. Mai 1999 (1999-05-21)

## Beschreibung

Die Erfindung betrifft ein Telefon mit Anzeigeeinheit, Speichereinrichtung und Prozessoreinrichtung.

Die rasante technische Entwicklung auf dem Gebiet der Mobilkommunikation hat in den letzten Jahren zur Entwicklung und Bereitstellung einer Vielzahl verschiedener Mobiltelefone geführt. Im Zentrum der Entwicklung steht dabei auch das sogenannte Man-Machine-Interface (Mensch-Maschine-Schnittstelle), da eine einfache und intuitive Bedienung eines Mobiltelefons und seiner Vielfalt an Funktionen eine weitere Verbreitung der Mobilkommunikation fördern kann.

Es ist dabei bekannt, während eines Telefongesprächs auf einem Display eines Mobiltelefons die Rufnummer eines zweiten Mobiltelefons anzuzeigen, zu dem gerade eine Telefonverbindung besteht.

Da gerade Mobiltelefonnummern häufig aus einer großen Anzahl von Ziffern bestehen, stehen viele Nutzer während eines Gesprächs häufig vor dem Problem, dem Kommunikationspartner Auskunft über die eigene Rufnummer geben zu wollen, sie dazu aber nicht in der Lage sind, weil sie ihre eigene Rufnummer nicht aus dem Gedächtnis wiedergeben können. Zwar sind Mobiltelefone erhältlich, die mit einem elektronischen Telefonbuch ausgestattet sind, das auch einen Eintrag der eigenen Rufnummer enthält, aber die Abfrage dieser Rufnummer während einer bestehenden Telefonverbindung ist den meisten Nutzern zu aufwendig oder sogar unmöglich.

Dokument JP-11136343 beschreibt ein Telefon mit Anzeigeeinheit, dadurch durch Betätigung eines spezifischen Knoßfschalters des Telefons die eigene Rufnummer anzeigt.

Der Erfindung liegt daher die Aufgabe zugrunde, ein Telefon anzugeben, das es einem Nutzer auf einfache Weise ermöglicht, während einer Telefonverbindung Auskunft über die eigene Rufnummer zu geben.

Diese Aufgabe wird durch die Merkmale des unabhängigen Anspruchs gelöst. Vorteilhafte und zweckmäßige Weiterbildungen ergeben sich aus den abhängigen Ansprüchen.

Erfindungsgemäß wird also die Prozessoreinrichtung eines Telefons derart eingerichtet, dass automatisch während einer Telefonverbindung die Rufnummer des Telefons angezeigt wird.

Dadurch kann ein Nutzer durch einen kurzen Blick auf die Anzeigeeinheit seines Telfons während einer Telefonverbindung seine Rufnummer erfahren und darüber Auskunft geben.

Weiterbildungen der Erfindung sehen besonders intuitive Varianten zur Anzeige der Rufnummer vor, insbesondere auch in Kombination mit weiteren Informationen.

Die Erfindung wird im Folgenden anhand bevorzugter Ausführungsbeispiele näher beschrieben, zu deren Erläuterung nachstehende Figur dient:

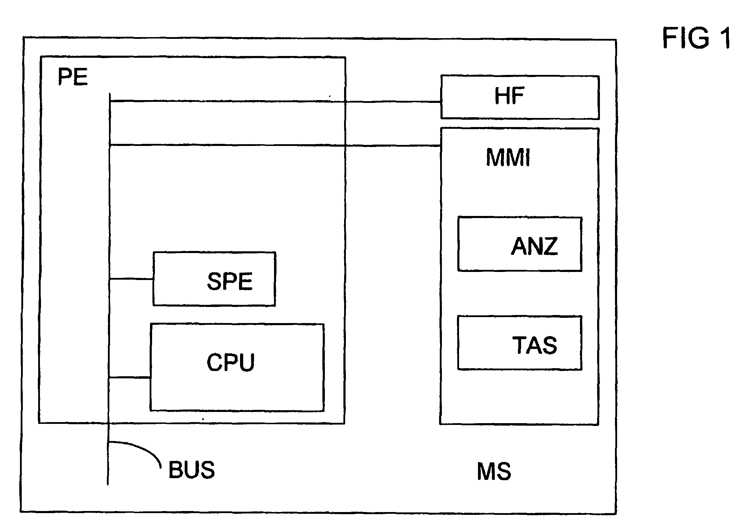

Figur 1 Prinzip-Blockschaltbild einer Mobilstation.

Figur 1 zeigt als Telefon eine Mobilstation MS, welche eine Bedieneinrichtung MMI eine Hochfrequenzeinrichtung HF und eine Prozessoreinrichtung PE enthält. Die Bedieneinrichtung MMI umfaßt eine Anzeigeeinrichtung ANZ, wie beispielsweise ein Grafikdisplay, und Betätigungselemente, wie beispielsweise Tasten oder Softkeys. Die Bedieneinrichtung MMI kann auch als Touchscreen ausgebildet sein. Zur Steuerung der Mobilstation MS und der Verfahren, welche durch die Mobilstation ausgeführt werden, ist eine programmgesteuerte Prozessoreinrichtung PE, wie beispielsweise ein Mikrocontroller vorgesehen, der auch einen Prozessor CPU und eine Speichereinrichtung SPE umfassen kann.

Je nach Ausführungsvariante können dabei innerhalb oder außerhalb der Prozessoreinrichtung PE weitere - der Prozessoreinrichtung zugeordnete, zur Prozessoreinrichtung gehörende, durch die Prozessoreinrichtung gesteuerte oder die Prozessoreinrichtung steuernde - Komponenten, wie beispielsweise ein digitaler Signalprozessor oder weitere Speichereinrichtungen angeordnet sein, deren prinzipielle Funktion im Zusammenhang mit einer Prozessoreinrichtung zur Steuerung einer Mobilstation einem Fachmann hinreichend bekannt ist, und auf welche daher an dieser Stelle nicht näher eingegangen wird. Die unterschiedlichen Komponenten können über ein Bussystem BUS oder Ein-/Ausgabeschnittstellen und gegebenenfalls geeignete Controller mit dem Prozessor CPU Daten austauschen.

Je nach Ausführungsvariante kann die Speichereinrichtung SPE, bei der es sich auch um einen oder mehrere flüchtige und/oder nicht flüchtige Speicherbausteine handeln kann, oder Teile der Speichereinrichtung SPE als Teil der Prozessoreinrichtung PE (in Figur dargestellt) realisiert sein oder als externe Speichereinrichtung (in Figur nicht dargestellt) realisiert sein, die außerhalb der Prozessoreinrichtung PE lokalisiert ist und mittels geeigneter Schnittstellen oder eines geeigneten Bussystems mit der Prozessoreinrichtung PE verbunden ist. Die Speichereinrichtung kann zumindest teilweise auch auf einem Teilnehmeridentifizierungsmodul realisiert sein.

In der Speichereinrichtung SPE sind die Programmdaten, wie beispielsweise die Steuerbefehle oder Steuerprozeduren, die zur Steuerung der Mobilstation herangezogen werden, gespeichert. Darüber hinaus sind in der Speichereinrichtung SPE Rufnummern, insbesondere die Rufnummer des Telefons selbst, abgespeichert. Als Rufnummer des Telefons wird dabei auch die Rufnummer des Nutzers des Telefons verstanden, die durch die dem Teilnehmeridentifizierungsmodul des Nutzers zugeordnete Rufnummer definiert sein kann. Eine Ausführungsvariante der Erfindung sieht vor, dass diese Rufnummer des Telefons in dem Teilnehmeridentifizierungsmodul abgespeichert ist.

Die Prozessoreinrichtung des Telefons ist nun derart eingerichtet, dass während eines Telefongespräch bzw. einer Telefonverbindung zwischen dem Telefon und einem zweiten Telefon automatisch die Rufnummer des Telefons auf der Anzeigeeinheit dargestellt wird. Bei der Telefonverbindung kann es sich auch um eine Mobilfunkverbindung, eine Festnetzverbindung, eine Voice-over-IP-Verbindung oder eine Kombination dieser verschiedenen Verbindungsarten handeln. Die automatische Darstellung der Rufnummer des Telefons kann dabei auch durch die Annahme eines ankommenden Rufes, durch die Auslösung eines Verbindungsaufbaus durch das Drücken einer entsprechenden Verbindungsaufbautaste oder durch die Vollendung eines Verbindungsaufbaus, also das Bestehen einer Verbindung, ausgelöst werden.

Je nach Ausführungsvariante kann die Anzeige der Rufnummer des Telefons gleichzeitig oder alternierend mit anderen Informationen, wie beispielsweise der Rufnummer des zweiten Telefons oder der Dauer der Telefonverbindung erfolgen.

Neben den oben erläuterten Ausführungsvarianten der Erfindung liegt eine Vielzahl weiterer Ausführungsvarianten im Rahmen der beiliegenden Ansprüche, welche hier nicht weiter beschrieben werden, aber anhand der erläuterten Ausführungsbeispiele einfach in die Praxis umgesetzt werden können.

## Patentansprüche

1. Telefon (MS),
- mit einer Anzeigeeinheit (ANZ) zur Anzeige einer Rufnummer,
- mit einer Speichereinrichtung (SPE) zur Speicherung der Rufnummer des Telefons, und
- mit einer Prozessoreinrichtung (PE), die derart eingerichtet ist,
- dass die Rufnummer des Telefons während einer Sprachverbindung zwischen dem Telefon und einem zweiten Telefon automatisch auf der Anzeigeeinheit dargestellt wird **dadurch gekennzeichnet, dass**
- die Rufnummer des Telefons automatisch nach dem Aufbau einer Telefonverbindung oder nach der Betätigung eines Betätigungselementes zum Aufbau einer Telefonverbindung angezeigt wird.

2. Telefon nach einem der vorhergehenden Ansprüche,
- bei dem die Prozessoreinrichtung derart eingerichtet ist, dass die Rufnummer des Telefons und die Rufnummer des zweiten Telefons gleichzeitig oder alternierend dargestellt werden.

3. Telefon nach einem der vorhergehenden Ansprüche,
- bei dem die Prozessoreinrichtung derart eingerichtet ist, dass die Rufnummer des Telefons und die Informationen über die Dauer der Telefonverbindung gleichzeitig oder alternierend dargestellt werden.

## Claims

1. Telephone (MS),
- having a display unit (ANZ) for displaying a telephone number,
- having a memory device (SPE) for storing the telephone number of the telephone, and
- having a processor device (PE) which has been set up in such a manner
- that the telephone number of the telephone is automatically displayed on the display unit during a voice link between the telephone and a second telephone,
**characterized in that**
- the telephone number of the telephone is automatically displayed after a telephone connection has been set up or after an operating element for setting up a telephone connection has been operated.

2. Telephone according to Claim 1,
- in which the processor device has been set up in such a manner that the telephone number of the telephone and the telephone number of the second telephone are displayed simultaneously or alternately.

3. Telephone according to either one of the preceding claims,
- in which the processor device has been set up in such a manner that the telephone number of the telephone and the information on the duration of the telephone connection are displayed simultaneously or alternately.

## Revendications

1. Téléphone (MS), comprenant
- une unité d'affichage (ANZ) pour l'affichage d'un numéro d'appel,
- un dispositif de stockage (SPE) pour le stockage du numéro d'appel du téléphone et
- un dispositif processeur (PE), qui est équipé de telle sorte
- que le numéro d'appel du téléphone est représenté automatiquement sur l'unité d'affichage pendant une liaison téléphonique entre le téléphone et un second téléphone, **caractérisé en ce que**
- le numéro d'appel du téléphone est affiché automatiquement après l'établissement d'une liaison téléphonique ou après l'actionnement d'un élément de commande pour l'établissement d'une liaison téléphonique.

2. Téléphone selon l'une quelconque des revendications précédentes,
- sur lequel le dispositif processeur est équipé de telle sorte que le numéro d'appel du téléphone et le numéro d'appel du second téléphone sont présentés simultanément ou en alternance.

3. Téléphone selon l'une quelconque des revendications précédentes,
- sur lequel le dispositif processeur est équipé de telle sorte que le numéro d'appel du téléphone et l'information sur la durée de la liaison téléphonique sont présentés simultanément ou en alternance.
